Europäisches Patentamt

European Patent Office

Office européen des brevets

(11) Numéro de publication: **0 303 532**
**B1**

(12) **FASCICULE DE BREVET EUROPEEN**

(45) Date de publication du fascicule du brevet: **16.01.91**

(21) Numéro de dépôt: **88402038.9**

(22) Date de dépôt: **04.08.88**

(51) Int. Cl.⁵: **G 01 M 1/10, G 01 M 1/12**

(54) Appareil de mesure des caractéristiques massiques d'un corps et son application à la mesure des caractéristiques d'un satellite à sec.

(30) Priorité: **05.08.87 FR 8711137**

(43) Date de publication de la demande:
**15.02.89 Bulletin 89/07**

(45) Mention de la délivrance du brevet:
**16.01.91 Bulletin 91/03**

(84) Etats contractants désignés:
**DE ES FR GB IT NL**

(56) Documents cités:
**US-A-3 040 563**

**SOVIET INVENTIONS ILLUSTRATED, semaine 85 U 5, 13 mars 1985, Derwent Publications Ltd, Londres, GB; & SU-A-1 097 899 (CONS ROAD EQUIP RES) 15-06-1984**

(73) Titulaire: **AEROSPATIALE Société Nationale Industrielle
37, Boulevard de Montmorency
F-75781 Paris Cédex 16 (FR)**

(72) Inventeur: **Rollet, Robert
67 rue de la Fontaine
F-06550 La Roquette sur Siagne (FR)**

(74) Mandataire: **Rinuy, Santarelli
14, avenue de la Grande Armée
F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a pour objet un appareil pour déterminer les caractéristiques massiques d'une pièce disposée verticalement, par exemple un satellite artificiel qui est un objet de grande dimension, fragile et de manipulation malaisée.

Les modalités de lancement, de mise en orbite et de positionnement sur orbite d'un satellite nécessitent de connaître sa masse, la position de son centre de gravité et ses moments d'inertie, que l'on désigne globalement par ses "caractéristiques massiques". Ces caractéristiques correspondent en pratique au satellite muni de ses équipements repliés, mais sans carburant (à sec).

Dans l'état actuel des choses, ces caractéristiques sont déterminées, chacune au moyen d'un dispositif spécifique, ce qui multiplie pour le satellite les risques de dommages dûs aux manipulations et accroît la durée et le coût global des mesures.

En particulier la masse est souvent mesurée par pesage, tandis que le moment d'inertie longitudinal est mesuré en posant verticalement le satellite, en le centrant, sur un plateau monté oscillant autour d'un axe vertical sur une embase posée au sol. On peut utiliser pour cela un dispositif vendu par la Société SCHENCK sous la référence M7. Quant à la mesure des moments d'inertie transverses, elle nécessite la mise à l'horizontale du satellite au moyen d'un outillage complexe, de masse et d'inertie importantes. La présence de cet outillage lors des opérations de mesure des moments transverses diminue la précision des mesures d'inertie par rapport à un axe transverse donné et limite le nombre des axes de mesure possibles à deux, ce qui est insuffisant pour connaître l'ellipse d'inertie centrale transverse. En outre un tel disparitif avec trois axes fixes est décrit dans US—A—3 040 563.

La présente invention vise à pallier ces inconvénients en permettant de mesurer l'ensemble des caractéristiques massiques d'un satellite ou d'un objet équivalent dans une orientation unique constante, de préférence disposé verticalement, et ce, au prix d'une seule manipulation.

L'appareil de mesure faisant l'objet de la présente invention comprend essentiellement deux dispositifs superposés constituant des pendules libres oscillants, d'axes respectivement vertical et horizontal.

L'invention propose ainsi un appareil de mesure pour la détermination de la masse, de la position du centre de gravité et des moments d'inertie d'un corps maintenu dans une orientation constante prédéterminée, du genre comportant, porté par une embase, un plateau de réception pour ce corps monté oscillant, par rapport à un axe normal au plateau sensiblement vertical, de part et d'autre d'une position angulaire d'équilibre stable vers laquelle ce plateau est ramené élastiquement par des moyens de rappel, ce plateau et cette embase étant munis d'un détecteur de la position angulaire du plateau par rapport à l'embase et d'organes de blocage du plateau sur l'embase, caractérisé en ce que cette embase est elle-même portée par une structure mobile, portée par un socle, et montée oscillante par rapport à un axe horizontal ajustable coupant ledit axe vertical à une hauteur réglable de part et d'autre d'une position angulaire d'équilibre stable, dans laquelle l'axe normal du plateau est vertical et vers laquelle cette structure mobile est ramenée élastiquement par de seconds moyens de rappel, ce socle et cette structure mobile étant munis d'un système de détection de la position angulaire de la structure mobile par rapport au socle, d'organes de blocage de la structure mobile par rapport au socle en position d'équilibre stable et d'organes de réglage en hauteur de l'axe horizontal instantané d'oscillation, cet appareil étant en outre muni de moyens de positionnement et de blocage du corps par rapport à la structure mobile en une pluralité de positions angulaires.

Ainsi qu'il apparaîtra plus loin un tel appareil permet de mesurer, sans manipulation intermédiaire du corps, la masse de celui-ci, de repérer la position de son centre la gravité et de mesurer aussi bien le moment d'inertie longitudinal que ses moments d'inertie transverses.

Le corps est de préférence monté sur le plateau en sorte qu'un de ses axes principaux d'inertie soit confondu avec l'axe normal au plateau. Le corps est avantageusement orienté verticalement sur ce plateau.

Les moyens de positionnement et de blocage en position du corps par rapport à la structure mobile sont avantageusement distincts des moyens de blocage en position du plateau par rapport à l'embase grâce à quoi ces derniers peuvent être prévus pour n'agir que dans la configuration d'équilibre stable du plateau par rapport à l'embase. Cela permet de simplifier la structure de ces moyens de blocage et d'éviter d'avoir à bloquer le plateau en une configuration dans laquelle les moyens élastiques de rappel associés sont sollicités de manière dissymétrique.

Ces moyens de blocage en position en corps par rapport à la structure mobile sont avantageusement constitués d'une couronne tournante d'axe confondu avec l'axe normal au plateau et munie d'organes de verrouillage temporaire. Cette couronne peut être disposée entre le corps et le plateau mais est avantageusement disposée entre l'embase et la structure mobile grâce à quoi son inertie ne perturbe pas les mesures d'inertie effectuées par oscillation du plateau par rapport à l'embase.

Un système d'air comprimé est avantageusement prévu pour sustenter le plateau sur coussin d'air lors de ses oscillations par rapport à l'embase, en sorte de réduire l'amortissement par frottement de ces oscillations.

Ce plateau est de préférence monté, oscillant sur l'embase, au moyen d'un ensemble de lames élastiques de flexion disposées soit perpendiculairement (Montage BENDIX) soit radialement et formant pivot fictif d'oscillation et ressort de rappel. Le montage BENDIX est connu en soi dans les appareils connus de mesure du moment d'inertie longitudinale des satellites.

Un périodemètre est avantageusement associé au détecteur de position lié au plateau et à l'embase. Cela suffit pour mesurer la fréquence d'oscillation, étant précisé que l'amplitude d'oscillation n'importe pas dans le calcul des moments d'inertie. Cela vaut également pour le détecteur de position de la structure mobile par rapport au socle; les détecteurs sont avantageusement du type sans contact.

Des dispositifs de tout type connu sont prévus pour la mise en oscillation du plateau par rapport à l'embase et/ou de la structure fixe par rapport au socle.

La structure mobile est de préférence constituée d'un cadre lié à l'embase, avec éventuelle possibilité de rotation de l'embase par rapport au cadre par la couronne tournante précitée, reposant sur des patins glissant sur deux platines liées au socle et orientables sous l'action d'un dispositif de commande en orientation. Les patins sont de préférence deux lattes allongées, parallèles à l'axe horizontal d'oscillation et symétriques par rapport à l'axe du plateau engagées dans des rainures parallèles des platines dans lesquelles elles peuvent se déplacer transversalement dans les plans de ces platines à l'encontre de ressorts de rappel. Ceux-ci sont de préférence amovibles poru pouvoir être remplacés par d'autres ressorts de raideur différente.

Le cadre est avantageusement lié aux patins par des articulations d'axe parallèle à l'axe horizontal d'oscillation, et symétriques par rapport à l'axe du plateau, ce qui provoque un mouvement d'ensemble des patins assurant pour ceux-ci des oscillations de même amplitude instantanée.

Les patins sont de préférence montés sur coussin d'air dans les rainures des platines, ce qui réduit l'amortissement par frottement de l'amplitude des oscillations.

Les positions d'équilibre stable des patins dans leurs platines sont de préférence symétriques par rapport à un plan vertical contenant l'axe horizontal instantanée d'oscillation pour des raisons d'équilibrage.

Ces platines orientables sont avantageusement articulées sur le socle autour d'axes d'articulation voisins des axes d'articulation des patins du cadre. Elles sont de préférence respectivement munies de bras globalement dirigés vers un dispositif de commande en inclinaison globalement disposé dans un plan vertical de symétrie parallèle aux axes d'articulation, et qui constitue les organes précités de réglage en hauteur de l'axe instantané, d'oscillation. Ces bras sont de préférence au nombre de deux, à raison d'un bras par platine, disposés dans un plan vertical perpendiculaire aux axes d'articulation.

Les bras se terminent de préférence, à proximité du plan vertical de symétrie, par des fourches encadrant au moins un doigt horizontal parallèle aux axes d'articulation et commandés en hauteur par un vérin de commande constitutif du dispositif de commande en inclinaison des platines. Ce doigt est par exemple lié au piston de ce vérin.

De manière préférée ce dispositif de commande en orientation est adapté à amener les platines, donc les patins, dans un même plan horizontal.

L'invention concerne également l'application spécifique de cet appareil à la mesure des caractéristiques massiques d'un satellite disposé verticalement muni de ses équipements en configuration repliée mais sans carburant.

A cet appareil sont de préférence associées des corps étalons de masse, de moments d'inertie et de centre de gravité connus pour le calibration des détecteurs ou des périodemètres de manière à permettre une correction des signaux de mesure enregistrés de manière à en déduire les caractéristiques massiques du corps seul, en éliminant l'influence parasite des pièces mobiles de l'appareil (plateau, embase, structure mobile, couronne tournante).

Cet appareil est avantageusement équipé d'une unité automatique de contrôle de commande adaptée à effectuer automatiquement des cycles complets de mesure des caractéristiques massiques du corps.

La description qui va suivre en regard des dessins annexés, donnée à titre d'exemple non limitatif, fera bien comprendre comment l'invention peut être réalisée et utilisée, et avec quels avantages. Sur ces dessins:

—la figure 1 est une vue schématique de profil d'un appareil conforme à la présente invention,

—la figure 2 est une vue de détail des deux patins à air du pendule horizontal,

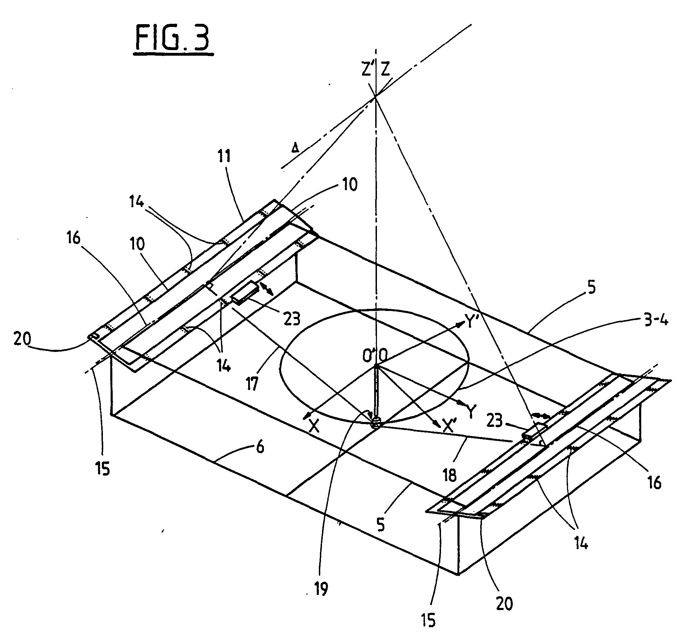

—la figure 3 est une vue en perspective du pendule horizontal,

—la figure 4 est une vue en perspective du système de pivot vertical fictif dupendule vertical de l'appareil selon une première forme de réalisation, et

—la figure 5 est une vue en perspective analogue selon une seconde forme de réalisation.

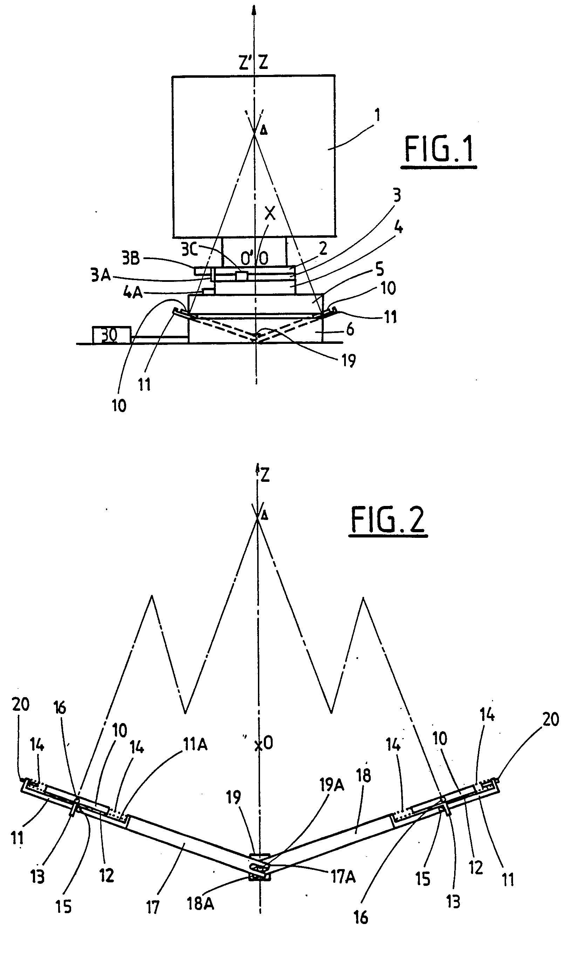

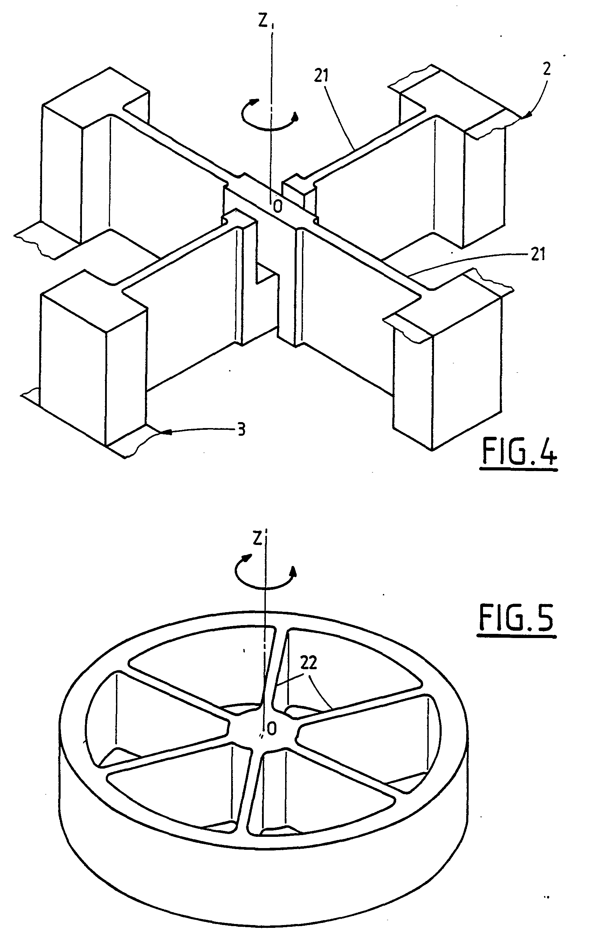

Sur la figure 1 on voit, schématisé en 1, le corps à mesurer, défini par un référentiel comportant un axe principal d'inertie vertical O'Z', fixé sur un plateau 2 de façon à avoir son axe O'Z' confondu avec un axe OZ normal à la surface de réception de ce dernier. Le plateau est lié à une embase 3 en sorte de pouvoir osciller librement autour de cet axe OZ. De manière classique cette liaison est assurée par un ensemble de lames élastiques 21 ou 22 disposées, soit perpendiculairement (figure 4), soit radialement (figure 5) faisant office à la fois de pivot fictif d'axe OZ et de ressort de rappel.

De l'air comprimé est injecté entre le plateau 2 et l'embase 3 par des moyens non représentés de tout type connu pour assurer la sustentation de la charge (2+1) avec un frottement très faible entre ces deux parties 2 et 3.

A ce plateau et à cette embase sont associés un capteur de déplacement angulaire schématisé en 3A, complété par un périodemètre 3B émettant des signaux au moins représentatifs de la fréquence des oscillations, et un dispositif de blocage angulaire 3C. Ces éléments sont de tout type connu approprié.

Le pendule libre (1+2)—3 ainsi constitué est à axe vertical et possède une période d'oscillation dont la mesure comparée à celle obtenue avec une inertie étalon, permet de calculer le moment d'inertie du corps 1 par rapport à son axe O'Z'.

L'embase 3 est à son tour liée à un cadre rectangulaire (ou structure mobile) 5 au moyen d'une couronne tournante 4 d'axe confondu avec OZ et muni de moyens 4A de blocage temporaire par rapport au cadre 5 et pouvant avantageusement être sustenté par air comprimé pendant la rotation.

Le cadre 5 repose sur un socle rectangulaire 6 posé au sol, par appui sur deux patins 10, allongés parallèlement à un axe horizontal OX du socle et mobiles perpendiculairement à cet axe OX dans des rainures 11A ménagées dans des platines 11 orientables sur lesquelles ces patins glissent perpendiculairement aux axes OX et OZ en étant sustentés par un film d'air sous pression 12 alimenté par un système de canalisation non représenté connecté en 13. Des jeux symétriques de ressorts 14 disposés de part et d'autre des patins dans leur plan de glissement sur les platines 11 assurent le rappel des patins 10 en une position centrale par rapport à ces platines 11.

Des capteurs de déplacement sans contact 20 complétés par un périodemètre, fixés sur les platines 11, mesurent la position instantanée des patins 10 par rapport aux platines, perpendiculairement à OX, afin d'évaluer, soit la fréquence d'oscillation du corps 1, soit la position statique de ce même corps. Des organes 23, ici formés de plaques mobiles dans le plan des patins perpendiculairement à OX et OZ, permettent un blocage du cadre 5 par rapport au socle.

Les platines 11 sont articulées autour d'axes 15 liés au socle 6 tandis que les patins 10 sont articulés autour d'axes 16 voisins des axes 15 et liés au cadre 5. Les axes 15 et 16 sont parallèles à l'axe OX et sont, en moyenne, symétriques par rapport au plan vertical OXZ du plateau 2.

Les platines, donc les patins sont orientables simultanément et symétriquement à ce plan OXZ au moyen d'un dispositif constitué de deux bras 17 et 18 liés rigidement aux platines 11, et convergeant, dans le plan de la figure 2, en un point de concours situé sur l'axe OZ, à un niveau ajustable.

Ces bras 17 et 18 se terminent auprès de cet axe OZ, par des fourches 17A, 18A encadrant un doigt 19A réglable en hauteur sous l'action d'un vérin central vertical 19.

La droite Δ définie par l'intersection des plans normaux aux patins passant par les axes 15 constitue l'axe de rotation instantanée du corps 1 lors du mouvement oscillant des parties mobiles 10 des patins sous l'action de la force de rappel des ressorts 14, la charge étant supportée et guidée latéralement par le film d'air 12 minimisant au maximum les frottements.

Comme les platines sont orientées symétriquement par rapport au plan XOZ, cette droite coupe l'axe OZ.

La mesure de la période du mouvement oscillant permet de déterminer le moment d'inertie du corps 1 par rapport à cette droite.

Une modification de l'orientation des deux patins à air au moyen du vérin 19 permet de déplacer l'axe Δ par rapport au corps 1, le long de l'axe OZ, et d'obtenir une série de valeurs du moment d'inertie du corps 1 et des éléments 2, 3, 4 et 5 par rapport à des axes parallèles. La valeur minimum de ce moment d'inertie correspond à l'axe passant par le centre de gravité de l'ensemble 1+2+3+4+5 ce qui perment, après correction, d'obtenir la coordonnée Z du centre de gravité du corps 1 seul.

Les mêmes mesures effectuées en orientant différemment le corps 1 par rapport à l'axe OZ au moyen de la couronne tournante 4 permet de déterminer l'ellipse d'inertie transverse centrale.

En orientant les patins de façon à les rendre coplanaires en obtient des oscillations de translation dont la période comparée à celle obtenue avec une masse de référence permet de connaître la masse du corps 1, après déduction de la masse des éléments 2, 3, 4 et 5.

La mesure de la position d'équilibre du corps 1 pour différentes positions angulaires du corps 1 autour de OZ obtenues au moyen de la couronne tournante 4 permet de déterminer les coordonnées x y et z du centre de gravité du corps 1. Les coordonnées x et y peuvent éventuellement être annulées par addition de masses d'équilibrage statique fixées sur le corps 1.

Les différentes fonctions de l'appareil:
—manoeuvre et détection de la position du vérin 19;
—rotation et détection de la position de la couronne tournante 4;

| —alimentation en air | |
|---|---|
| —lancement | du pendule |
| —mesure de la période | vertical |
| —blocage mécanique | |

| —alimentation en air | |
|---|---|
| —lancement | |
| —mesure de la période | du pendule |
| —mesure de la position statique | horizontal |
| —blocage mécanique | |
| —calculs divers | |

peuvent être gérées de toute manière appropriée par un calculateur 30 permettant de rendre automatique la mesure des caractéristiques massiques d'un objet quelconque. Le logiciel de ce calculateur se déduit aisément des explications données ci-dessus.

**Revendications**

1. Appareil de mesure pour la détermination de la masse, de la position du centre de gravité et des moments d'inertie d'un corps (1) maintenu dans une orientation constante prédéterminée, du genre comportant, porté par une embase (3), un plateau de réception (2) pour ce corps monté oscillant, par rapport à un axe normal au plateau sensiblement vertical, de part et d'autre d'une position angulaire d'équilibre stable vers laquelle ce plateau est ramené élastiquement par des moyens de rappel (21, 22), ce plateau et cette embase étant munis d'un détecteur (3A) de la position angulaire du plateau par rapport à l'embase et d'organes (3C) de blocage du plateau sur l'embase, caractérisé en ce que cette embase (3) est elle-même portée par une structure mobile (5) portée par un socle (6), et montée oscillante, par rapport à un axe horizontal ajustable (Δ) coupant ledit axe vertical à une hauteur réglable de part et d'autre d'une position angulaire d'équilibre stable, dans laquelle l'axe normal du plateau est vertical et vers laquelle cette structure mobile est ramenée élastiquement par de seconds moyens de rappel (14), ce socle et cette structure mobile étant munis d'un système (20) de détection de la position angulaire de la structure mobile (5) par rapport au socle (6), d'organes (23) de blocage de la structure mobile par rapport au socle en position d'équilibre stable et d'organes (19) de réglage en hauteur de l'axe horizontal instantané d'oscillation (Δ), cet appareil étant en outre muni de moyens (4, 4A) de positionnement et de blocage du corps par rapport à la structure mobile en une pluralité de positions angulaires.

2. Appareil selon la revendication 1, caractérisé en ce que les moyens (4, 4A) de positionnement et de blocage en position du corps par rapport à la structure mobile sont avantageusement distincts des moyens 3C) de blocage en position du plateau par rapport à l'embase.

3. Appareil selon la revendication 2, caractérisé en ce que ces moyens (4, 4A) de blocage en position du corps par rapport à la structure mobile sont avantageusement constitués d'une couronne tournante (4) d'axe confondu avec l'axe normal au plateau et munie d'organes de verrouillage temporaire (4A).

4. Appareil selon la revendication 3, caractérisé en ce que cette couronne (4) est disposée entre l'embase (3) et la structure mobile (5).

5. Appareil selon l'une quelconque des revendications 1 à 4, caractérisé en ce qu'un système d'air comprimé est prévu pour sustenter le plateau sur coussin d'air lors de ses oscillations par rapport à l'embase.

6. Appareil selon l'une quelconque des revendications 1 à 5, caractérisé en ce que ce plateau est monté oscillant sur l'embase, au moyens d'un ensemble de lames élastiques de flexion (21) disposées perpendiculairement ou radialement et formant pivot fictif d'oscillation et ressort de rappel.

7. Appareil selon l'une quelconque des revendications 1 à 6, caractérisé en ce qu'un périodemètre (3B) est associé au détecteur de position (3A) lié au plateau (2) et à l'embase (3).

8. Appareil selon l'une quelconque des revendications 1 à 7, caractérisé en ce que la structure mobile est constituée d'un cadre (5) lié à l'embase, reposant sur des patins (10) glissant sur deux platines (11) liées au socle (6), orientables sous l'action d'un dispositif de commande en orientation (19).

9. Appareil selon la revendication 8, caractérisé en ce que les patins (10) sont de préférence deux lattes allongées parallèles à l'axe horizontal d'oscillation (Δ) et symétriques par rapport à l'axe (OZ) du plateau, engagées dans des rainures parallèles des platines dans lesquelles elles peuvent se déplacer transversalement dans les plans de ces platines à l'encontre de ressorts de rappel (14).

10. Appareil selon la revendication 8 ou la revendication 9, caractérisé en ce que le cadre (5) est lié aux patins (10) par des articulations (16) d'axe parallèle à l'axe horizontal d'oscillation, et symétriques par rapport à l'axe du plateau.

11. Appareil selon l'une quelconque des revendications 8 à 10, caractérisé en ce que les patins (10) sont montés sur coussin d'air (12) dans les rainures des platines.

12. Appareil selon l'une quelconque des revendications 8 à 11, caractérisé en ce que les positions d'équilibre stable des patins dans leurs platines sont symétriques par rapport à un plan vertical contenant l'axe horizontal instantané d'oscillation.

13. Appareil selon l'une quelconque des revendications 8 à 12, caractérisé en ce que les platines (11) orientables sont articulées sur le socle (6) autour d'axes d'articulation (15) voisins des axes d'articulations (16) des patins au cadre (5).

14. Appareil selon la revendication 13, caractérisé en ce que les platines sont de préférence respectivement munies de bras globalement dirigés vers un dispositif (19) de commande en inclinaison globalement disposé dans un plan vertical de symétrie parallèle aux axes d'articulation, et qui constitue les organes précités de réglage en hauteur de l'axe instantané d'oscillation.

15. Appareil selon la revendication 14, caractérisé en ce que les bras (17, 18) sont de préférence au nombre de deux, à raison d'un bras par platine, disposés dans un plan vertical perpendiculaire aux axes d'articulation.

16. Appareil selon la revendication 14 ou la revendication 15, caractérisé en ce que les bras se terminent à proximité du plan vertical de symétrie, par des fourches (17A, 18A) encadrant au moins un doigt horizontal (19A) parallèle aux axes d'articulation et commandés en hauteur par un vérin de commande (19) constitutif du dispositif de commande en inclinaison des platines.

17. Appareil selon la revendication 16, caractérisé en ce ce doigt (19A) est lié au piston de ce vérin.

18. Appareil selon l'une quelconque des revendications 8 à 17, caractérisé en ce que ce dispositif de commande en orientation (19) est adapté à amener les platines, donc les patins, dans un même plan horizontal.

19. Appareil selon l'une quelconque des revendications 1 à 18, caractérisé en ce qu'un périodemètre (3B) est associé au détecteur de position (3A) lié au plateau (2) et à l'embase (3).

20. Appareil selon l'une quelconque des revendications 1 à 19, caractérisé en ce que cet appareil est équipé d'une unité automatique de contrôle et de commande (30) adaptée à effectuer automatiquement des cycles complets de mesure des caractéristiques massiques du corps.

21. Application d'un appareil selon l'une quelconque des revendications 1 à 20, à la mesure des caractéristiques massiques d'un satellite à sec (1) disposé verticalement en sorte que son axe principal longitudinal d'inertie est confondu avec l'axe normal du plateau.

**Patentansprüche**

1. Meßvorrichtung zur Bestimmung der Masse, der Lage des Schwerpunktes und der Trägheitsmomente eines Körpers (1), der in einer vorgegebenen, gleichbleibenden Orientierung gehalten ist, mit einer von einer Fußplatte (3) getragenen Aufnahmeplatte (2) für den Körper, der bezüglich einer zur Aufnahmeplatte normalen, im wesentlichen vertikalen Achse beiderseits einer stabilen Gleichgewichts-Winkellage schwingend angeordnet ist, in die die Platte durch Rückstellmittel (21, 22) elastisch zurückgeführt wird, wobei die Aufnahmeplatte und die Fußplatte mit einem Detektor (3A) für die Winkellage der Aufnahmeplatte bezüglich der Fußplatte und mit Mitteln (3C) versehen sind, um die Aufnahmeplatte auf der Fußplatte festzulegen, dadurch gekennzeichnet, daß die Fußplatte (3) selbst von einem beweglichen Aufbau (5) getragen ist, der sich auf einem Sockel (6) abstützt, und bezüglich einer einstellbaren, horizontalen Achse (Δ), die die vertikale Achse in einer einstellbaren Höhe schneidet, beiderseits einer stabilen Gleichgewichts-Winkellage schwingend angeordnet ist, in der die zur Aufnahmeplatte normale Achse vertikal ausgerichtet ist und in die der bewegliche Aufbau durch zweite Rückstellmittel (14) elastisch zurückgeführt wird, wobei der Sockel und der bewegliche Aufbau mit einem System (20) zum Erfassen der Winkellage des beweglichen Aufbaus (5) bezüglich des Sockels (6), mit Mitteln (23) zum Festlegen des beweglichen Aufbaus bezüglich des Sockels in der stabilen Gleichgewichtslage und mit Mitteln (19) versehen sind, um die Höhe der augenblicklichen horizontalen Schwingungsachse (Δ) einzustellen, und die Vorrichtung ferner Mittel (4, 4A) zur Positionierung und zur Festlegung des Körpers bezüglich des beweglichen Aufbaus in einer Vielzahl von Winkellagen umfaßt.

2. Vorrichtung nach Anspruch 1, dadurch gekennzeichnet, daß die Mittel (4, 4A) zur Positionierung und zur Festlegung der Lage des Körpers bezüglich des beweglichen Aufbaus vorteilhafterweise verschieden von den Mitteln (3C) zur Festlegung der Lage der Aufnahmeplatte bezüglich der Fußplatte sind.

3. Vorrichtung nach Anspruch 2, dadurch gekennzeichnet, daß die Mittel (4, 4A) zur Festlegung der Lage des Körpers bezüglich des beweglichen Aufbaus vorteilhafterweise durch einen Drehkranz (4) mit einer Achse gebildet sind, die mit der zur Aufnahmeplatte normalen Achse zusammenfällt, und Elemente (4A) zur vorübergehenden Verriegelung umfassen.

4. Vorrichtung nach Anspruch 3, dadurch gekennzeichnet, daß der Kranz (4) zwischen der Fußplatte (3) und dem beweglichen Aufbau (5) angeordnet ist.

5. Vorrichtung nach einem der Ansprüche 1 bis 4, dadurch gekennzeichnet, daß ein Druckluft-System vorgesehen ist, um die Aufnahmeplatte während deren Schwingungen bezüglich der Fußplatte auf einem Luftkissen abzustützen.

6. Vorrichtung nach einem der Ansprüche 1 bis 5, dadurch gekennzeichnet, daß die Aufnahmeplatte schwingend auf der Fußplatte angebracht ist, und zwar mittels einer Anordnung von elastischen Biegelamellen (21), die senkrecht oder radial angeordnet sind und einen fiktiven Schwingungsdrehpunkt und eine Rückholfeder bilden.

7. Vorrichtung nach einem der Ansprüche 1 bis 6, gekennzeichnet durch ein Periodenmeter (3B), das dem Lagedetektor (3A) zugeordnet ist, der mit der Aufnahmeplatte (2) und der Fußplatte (3) verbunden ist.

8. Vorrichtung nach einem der Ansprüche 1 bis 7, dadurch gekennzeichnet, daß der bewegliche Aufbau durch einen mit der Fußplatte verbundenen Rahmen (5) gebildet ist, der auf Kufen (10) ruht, die auf zwei mit dem Sockel (6) verbundenen Platten (11) gleiten, die unter der Wirkung einer Orientierungs-Steuereinrichtung (19) einstellbar sind.

9. Vorrichtung nach Anspruch 8, dadurch gekennzeichnet, daß die Kufen (10) vorzugsweise zwei verlängerte Latten sind, die parallel zur horizontalen Schwingungsachse (Δ) und bezüglich der Achse (OZ) der Aufnahmeplatte symmetrisch sind und die in parallele Rillen der Platten eingreifen, in denen sie sich quer in den Ebenen dieser Platten entgegen den Rückholfedern (14) verlagern können.

10. Vorrichtung nach Anspruch 8 oder 9, dadurch gekennzeichnet, daß der Rahmen (5) mit den Kufen (10) durch Gelenke (16) verbunden ist, deren Achse parallel zur horizontalen Schwingungsachse ist und die bezüglich der Achse der Aufnahmeplatte symmetrisch sind.

11. Vorrichtung nach einem der Ansprüche 8 bis 10, dadurch gekennzeichnet, daß die Kufen (10) auf einem Luftkissen (12) in den Rillen der Platten angebracht sind.

12. Vorrichtung nach einem der Ansprüche 8 bis 11, dadurch gekennzeichnet, daß die stabilen Gleichgewichtslagen der Kufen in ihren Platten symmetrisch bezüglich einer vertikalen Ebene sind, die die augenblickliche horizontale Schwingungsachse enthält.

13. Vorrichtung nach einem der Ansprüche 8 bis 12, dadurch gekennzeichnet, daß die verstellbaren Platten (11) auf dem Sockel (6) um Schwenkachsen (15) schwenkbar angelenkt sind, die den Schwenkachsen (16) der Kufen am Rahmen (5) benachbart sind.

14. Vorrichtung nach Anspruch 13, dadurch gekennzeichnet, daß die Platten vorzugsweise jeweils mit Armen versehen, die insgesamt zu einer Steuervorrichtung (19) für die allgemeine Neigung hin gerichtet sind, die in einer vertikalen Symmetrieebene angeordnet ist, die parallel zu den Schwenkachsen verläuft, und die die Einstellelemente für die Höhe der augenblicklichen Schwingungsachse bildet.

15. Vorrichtung nach Anspruch 14, dadurch gekennzeichnet, daß die Arme (17, 18) vorzugsweise in einer Anzahl von zwei, und zwar ein Arm pro Platte, vorgesehen und in einer vertikalen Ebene angeordnet sind, die zu den Schwenkachsen senkrecht ist.

16. Vorrichtung nach Anspruch 14 oder 15, dadurch gekennzeichnet, daß die Arme in der Nähe der vertikalen Symmetrieebene enden, und zwar mit Gabeln (17A, 18A), die zumindest einen horizontalen Finger (19A) umgeben, der parallel zu den Schwenkachsen verläuft und in der Höhe durch ein Steuer-Stellglied (19) gesteuert ist, das die Steuervorrichtung für die Neigung der Platten bildet.

17. Vorrichtung nach Anspruch 16, dadurch gekennzeichnet, daß der Finger (19A) mit dem Kolben des Stellglieds verbunden ist.

18. Vorrichtung nach einem der Ansprüche 8 bis 17, dadurch gekennzeichnet, daß die Orientierungs-Steuervorrichtung (19) so ausgelegt ist, daß die Platten und damit die Kufen in einer gleichen horizontalen Ebene geführt werden.

19. Vorrichtung nach einem der Ansprüche 1 bis 18, dadurch gekennzeichnet, daß ein Periodenmeter (3B) dem Lagendetektor (3A) zugeordnet ist, der mit der Aufnahmeplatte (2) und der Fußplatte (3) verbunden ist.

20. Vorrichtung nach einem der Ansprüche 1 bis 19, dadurch gekennzeichnet, daß die Vorrichtung mit einer automatischen Überwachungs- und Steuervorrichtung (30) ausgestattet ist, die für ein automatisches Ausführen von vollständigen Meßzyklen zur Bestimmung der Masseeigenschaften des Körpers ausgelegt ist.

21. Verwendung einer Vorrichtung nach einem der Ansprüche 1 bis 20 zum Messen der Masseeigenschaften eines treibstofflosen Satelliten (1), der vertikal angeordnet ist, derart, daß seine Trägheits-Hauptlängsachse mit der zur Aufnahmeplatte normalen Achse zusammenfällt.

## Claims

1. Measuring apparatus for determining the mass, the position of the centre of gravity and the moments of inertia of a body (1) held in a predetermined constant orientation of the kind comprising, carried by a base (3), a receiving table (2) for the body mounted to oscillate, relative to a substantially vertical axis normal to the table, to either side of a stable equilibrium angular position to which the table is returned elastically by return means (21, 22), the table and the base being provided with a sensor (3A) for sensing the angular position of the table relative to the base and locking elements (3C) for locking the table to the base, characterized in that the base (3) is itself carried by a movable structure (5) carried by a stand (6) and mounted to oscillate relative to an adjustable horizontal axis (Δ) intersecting the said vertical axis at a height adjustable to either side of a stable equilibrium angular position in which the normal axis of the table is vertical and towards which the movable structure is returned elastically by second return means (14), the stand and the movable structure being provided with a system (20) for sensing the angular position of the movable structure (5) relative to the stand (6), locking elements (23) for locking the movable structure relative to the stand in a stable equilibrium position and means (19) for adjusting the height of the instantaneous horizontal oscillation axis (Δ), the apparatus being further provided with means (4, 4A) for positioning and locking the body relative to the movable structure in a plurality of angular positions.

2. Apparatus according to claim 1, characterized in that the means (4, 4A) for positioning and locking the body relative to the movable structure are advantageously separate from the means (3C) for locking the table relative to the base.

3. Apparatus according to claim 2, characterized in that the means (4, 4A) for locking the body relative to the movable structure advantageously comprise a ring (4) rotatable about an axis coincident with the axis normal to the table and provided with temporary locking members (4A).

4. Apparatus according to claim 3, characterized in that the ring (4) is disposed between the base (3) and the movable structure (5).

5. Apparatus according to any one of claims 1 to 4, characterized in that a compressed air system is provided for supporting the table on a cushion of air when it oscillates relative to the base.

6. Apparatus according to any one of claims 1 to 5, characterized in that the table is mounted to oscillate on the base by means of a set of leaf springs (21) disposed perpendicularly or radially and forming a virtual oscillation pivot and a return spring.

7. Apparatus according to any one of claims 1 to 6, characterized in that a periodmeter (3B) is associated with the position sensor (3A) linked to the table (2) and to the base (3).

8. Apparatus according to any one of claims 1 to 7, characterized in that the movable structure comprises a frame (5), linked to the base (3), resting on skids (10) sliding on two plates (11) linked to the stand (6) and adapted to be orientated by an orientation control device (19).

9. Apparatus according to claim 8, characterized in that the skids (10) are preferably two elongate shoes, parallel to the horizontal oscillation axis (Δ) and symmetrical relative to the axis (OZ) of the table, inserted in parallel grooves in the plates in which they are able to move transversely in the planes of the plates against return springs (14).

10. Apparatus according to claim 8 or claim 9, characterized in that the frame (5) is linked to the skids (10) by articulations (16) the axes of which are parallel to the horizontal oscillation axis and symmetrical relative to the table axis.

11. Apparatus according to any one of claims 8 to 10, characterized in that the skids (10) are supported on an air cushion (12) in the grooves in the plates.

12. Apparatus according to any one of claims 8 to 11, characterized in that the stable equilibrium positions of the skids on their plates are symmetrical relative to a vertical plane containing the instantaneous horizontal oscillation axis.

13. Apparatus according to any one of claims 8 to 12, characterized in that the orientatable plates (11) are articulated to the stand (6) about articulation axes (15) near the articulation axes (16) by which the skids are articulated to the frame (5).

14. Apparatus according to claim 13, characterized in that the plates are preferably provided with respective arms generally directed towards an inclination control device (19) generally disposed in a vertical plane of symmetry parallel to the articulation axes and constituting the aforementioned means for adjusting the height of the instantaneous oscillation axis.

15. Apparatus according to claim 14, characterized in that there are preferably two arms (17, 18), one arm per plate, disposed in a vertical plane perpendicular to the articulation axes.

16. Apparatus according to claim 14 or claim 15, characterized in that the arms terminate near the vertical plane of symmetry in forks (17A, 18A) framing at least one horizontal finger (19A) parallel to the articulation axes (16) the height of which is controlled by a control piston and cylinder actuator (19) constituting part of the plate inclination control device.

17. Apparatus according to claim 16, characterized in that the finger (19A) is linked to the piston of the actuator.

18. Apparatus according to any one of claims 8 to 17, characterized in that the orientation control device (19) is adapted to bring the plates and therefore the skids into a common horizontal plane.

19. Apparatus according to any one of claims 1 to 18, characterized in that a periodmeter (3B) is associated with the position sensor (3A) linked to the table (2) and to the base (3).

20. Apparatus according to any one of claims 1 to 19, characterized in that it is equipped with an automatic control and monitoring unit (30) adapted to perform automatically complete cycles for measuring the mass-related characteristics of the body.

21. Application of an apparatus according to any one of claims 1 to 20 to measuring the mass-related characteristics of a dry satellite (1) disposed vertically so that its main longitudinal axis of inertia is coincident with the axis normal to the table.

FIG.1

FIG.2

# FIG. 3

FIG.4

FIG.5